# EUROPÄISCHE PATENTANMELDUNG

(11) **EP 4 539 180 A1**
(43) Veröffentlichungstag der Anmeldung: **16.04.2025**
(21) Anmeldenummer: 23202968.6
(22) Anmeldetag: 11.10.2023
(51) Int. Cl.: H01M 10/04, H01M 10/0587, H01M 50/107, H01M 50/119, H01M 50/152, H01M 50/167, H01M 50/184, H01M 50/186, H01M 50/528, H01M 50/533, H01M 50/536, H01M 50/538, H01M 50/548, H01M 50/559

(54) **ENERGIESPEICHERELEMENT**

(71) Anmelder: VARTA Microbattery GmbH, 73479 Ellwangen Jagst (DE)
(72) Erfinder: Drews, Verena, Giengen 89537 (DE); Frank, Waldemar, 73479 Ellwangen (DE); Geiger, Michael, 73479 Ellwangen (DE); Kieninger, Dominik, 73492 Rainau (DE)
(74) Vertreter: Ostertag & Partner Patentanwälte mbB

(57) **Zusammenfassung**

Ein Energiespeicherelement (100) umfasst einen Elektroden-Separator-Verbund (104) aus bandförmigen Elektroden und mindestens einem bandförmigen Separator mit der Sequenz Anode (105) / Separator (156) / Kathode (108), der in Form eines zylindrischen Wickels vorliegt, in dem die Anode (105), der Separator (156) und die Kathode (108) um eine Wickelachse A herum aufgewickelt sind. Die Anode (105) und die Kathode (106) umfassen jeweils einen Stromkollektor (106, 109) mit einem mit Elektrodenmaterial bedeckten streifenförmigen Hauptbereich (107, 110) und einem freien Randstreifen (106b, 109b) entlang eines Längsrands (106a, 109b), der nicht mit dem Elektrodenmaterial bedeckt ist. Sie sind innerhalb des Elektroden-Separator-Verbunds (104) derart angeordnet, dass der freie Randstreifen (106b) des Anodenstromkollektors (106) aus einer ersten endständigen Stirnseite (104a) und der freie Randstreifen (109b) des Kathodenstromkollektors (108) aus einer zweiten endständigen Stirnseite (104b) des Wickels austritt. Ein Kontaktblechteil (112) sitzt auf einem der Randstreifen (106b, 109b) auf, deckt die Stirnseite (104a, 104b), aus der dieser Randstreifen austritt, ab und ist mit diesem Randstreifen stoffschlüssig verbunden. Der Stromkollektor, auf dessen Randstreifen (106b, 109b) das Kontaktblechteil (112) aufsitzt, liegt in dem zylindrischen Wickel in einer spiralförmigen Anordnung vor und weist eine außenliegende Windung (181) mit einem maximalen Radius R₁ auf. Das Kontaktblechteil (112) weist auf der von ihm abgedeckten Stirnseite (104a, 104b) ausgehend vom Schnittpunkt des Kontaktblechteils (112) mit der Wickelachse eine maximale radiale Erstreckung Eₘₐₓ auf. Hierbei ist der von der außenliegenden Windung (181) umfasste Bereich des Randstreifens (106b, 109b) zumindest abschnittweise radial nach innen umgebogen und es gilt Eₘₐₓ < R₁.

## Beschreibung

Die nachstehend beschriebene Erfindung betrifft ein Energiespeicherelement.

Elektrochemische Energiespeicherelemente sind dazu in der Lage, gespeicherte chemische Energie durch eine Redoxreaktion in elektrische Energie umzuwandeln. Die einfachste Form eines elektrochemischen Energiespeicherelements ist die elektrochemische Zelle. Sie umfasst eine positive und eine negative Elektrode, zwischen denen ein Separator angeordnet ist. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht. Der Separator verhindert somit einen unmittelbaren Kontakt der Elektroden. Gleichzeitig ermöglicht er aber einen elektrischen Ladungsausgleich zwischen den Elektroden.

Wenn die Entladung reversibel ist, also die Möglichkeit besteht, die bei der Entladung erfolgte Umwandlung von chemischer Energie in elektrische Energie wieder umzukehren und die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden als Energiespeicherelemente heute sekundäre Lithium-Ionen-Zellen eingesetzt, da diese hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. In der Regel sind Stromkollektoren mit dünnen Schichten aus den jeweiligen Aktivmaterialien beschichtet. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein.

Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen meist Lösungen von Lithiumsalzen wie Lithiumhexafluorophosphat (LiPF₆) in organischen Lösungsmitteln (z. B. Ether und Ester der Kohlensäure).

Die Kompositelektroden werden im Allgemeinen bei der Herstellung einer Lithium-Ionen-Zelle mit einem oder mehreren Separatoren zu einem Elektroden-Separator-Verbund kombiniert. Hierbei werden die Elektroden und Separatoren oft, allerdings keinesfalls zwingend, unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen wird der Elektroden-Separator-Verbund in Form eines Wickels gebildet oder zu einem Wickel verarbeitet. Im ersten Fall werden beispielsweise eine bandförmige positive Elektrode und eine bandförmige negative Elektrode sowie mindestens ein bandförmiger Separator separat einer Wickelmaschine zugeführt und in dieser zu einem Wickel mit der Sequenz positive Elektrode / Separator / negative Elektrode spiralförmig aufgewickelt. Im zweiten Fall werden eine bandförmige positive Elektrode und eine bandförmige negative Elektrode sowie mindestens ein bandförmiger Separator zunächst zu einem Elektroden-Separator-Verbund kombiniert, beispielsweise unter Anwendung des erwähnten Drucks. In einem weiteren Schritt wird dann der Verbund aufgewickelt.

Für Anwendungen im Automobilbereich, für E-Bikes oder auch für andere Anwendungen mit hohem Energiebedarf, wie z.B. in elektrischen Werkzeugen, werden Lithium-lonen-Zellen mit möglichst hoher Energiedichte benötigt, die gleichzeitig in der Lage sind, mit hohen Strömen beim Laden und Entladen belastet zu werden.

Häufig sind Zellen für die genannten Anwendungen als zylindrische Rundzellen ausgebildet, beispielsweise mit dem Formfaktor 21 × 70 (Durchmesser mal Höhe in mm). Zellen dieser Art umfassen stets einen Elektroden-Separator-Verbund in Form eines Wickels. Moderne Lithium-Ionen-Zellen dieses Formfaktors können eine Energiedichte von bis zu 270 Wh/kg erreichen.

Eine Herausforderung stellt das elektrische Kontaktieren der Elektroden eines Energiespeicherelements dar. Beispielsweise bei Rundzellen mit dem Formfaktor 21 × 70 müssen die Elektroden des Wickels elektrisch angebunden und mit den elektrischen Polen des jeweiligen Gehäuses verbunden werden.

Klassisch kommt hierbei das sogenannte "Tab-Design" zur Anwendung. Ein Ende eines streifenförmigen Metallblechs (das "Tab") wird mit einer Elektrode verschweißt, das andere Ende beispielsweise mit einem Funktionsteil eines CID (current interrupt device), das in einen mehrteiligen Deckel eines Metallgehäuses integriert ist. Ein Beispiel hierfür ist in der US 7432010 B2 beschrieben.

Das Tab-Design hat einige Schwächen. Ein Problem hierbei ist, dass das Tab verhältnismäßig lang sein muss, weil es nur vor dem Schließen des Gehäuses an die Innenseite des Deckels geschweißt werden kann. Und beim Verschließen des Gehäuses muss das Tab mindestens einmal gefaltet werden, was produktionstechnisch oft nicht einfach zu realisieren ist. Darüber hinaus nimmt das gefaltete Tab innerhalb eines Gehäuses Raum ein, der nicht mehr für elektrochemisches Aktivmaterial zur Verfügung steht, und das Tab selbst ist ein Engpass in Bezug auf den Stromfluss in und aus dem Gehäuse, aber auch in Bezug auf die Wärmeableitung. Wenn eine elektrochemische Zelle in Betrieb ist, wird in den Elektroden Wärme erzeugt, die abgeleitet werden muss. Dies ist schwierig, wenn nur ein Tab als thermische Brücke zur Verfügung steht.

In den letzten Jahren wurde verstärkt an Lithium-Ionen-Zellen gearbeitet, bei denen die Elektroden mittels eines sogenannten "Tabless-Designs" kontaktiert werden. Hierbei wird auf Tabs gänzlich verzichtet. Stattdessen werden aus bandförmigen Elektroden und Separatoren Elektroden-Separator-Verbünde in Form eines Wickels gefertigt, bei denen die Elektroden metallische Stromkollektoren mit unbeschichteten Randstreifen aufweisen, welche an Stirnseiten des Wickels aus dem Wickel herausragen. Dort können scheibenförmige Kontaktblechteile auf die Längsränder aufgeschweißt werden, wie das beispielsweise in der WO 2017/215900 A1 beschrieben ist. Dadurch ist es möglich, den Stromkollektor und damit auch die dazugehörige Elektrode über seine / ihre gesamte Länge elektrisch zu kontaktieren. Dies senkt den Innenwiderstand innerhalb der Zellen sehr deutlich. Das Auftreten großer Ströme kann in der Folge sehr viel besser abgefangen und auch Wärme kann besser aus dem Wickel abgeführt werden.

Aus montagetechnischen sowie aus Sicherheitsgründen sollten die scheibenförmigen Kontaktblechteile nicht über die Ränder der Stirnseiten hinausstehen. Zu groß ist sonst die Gefahr eines ungewollten Kontakts der Kontaktblechteile mit dem Zellgehäuse. Hinzu kommen teilweise hohe Einzelteiltoleranzen sowie eine beschränkte Positionierungsgenauigkeit beim Aufschweißen der Kontaktblechteile. All dies führt dazu, dass die Kontaktblechteile im Durchmesser kleiner als der Wickeldurchmesser ausgeführt werden müssen. Hinzu kommt, dass beim Aufschweißen der Kontaktblechteile auch die Schweißnahtpositionierung gewissen Fertigungstoleranzen unterliegt und die Schweißung somit nicht bis an den äußeren Rand der Kontaktblechteile ausgeführt werden kann. Daraus resultiert, dass äußere Windungen des Elektrodenwickels nicht stoffschlüssig an die Kontaktblechteile angebunden können, gegebenenfalls gar nicht in unmittelbarem Kontakt mit den Kontaktblechteilen stehen, was zu einem erhöhten Innenwiderstand führt.

### AUFGABE UND LÖSUNG

Der vorliegenden Erfindung lag die Aufgabe zugrunde, Energiespeicherelemente bereitzustellen, die sich durch eine hohe Energiedichte bei gleichzeitig niedrigem Innenwiderstand auszeichnen und bei denen die geschilderten Probleme nicht auftreten.

Diese Aufgabe wird durch das Energiespeicherelement mit den Merkmalen des Anspruchs 1 gelöst. Bevorzugte Ausführungsformen der Erfindung finden sich in den abhängigen Ansprüchen 2 bis 8.

Ein erfindungsgemäßes Energiespeicherelement zeichnet sich durch die folgenden Merkmale a. bis h. aus:
a. Das Energiespeicherelement umfasst einen Elektroden-Separator-Verbund aus bandförmigen Elektroden und mindestens einem bandförmigen Separator mit der Sequenz Anode / Separator / Kathode.
b. Der Elektroden-Separator-Verbund liegt in Form eines zylindrischen Wickels mit einer ersten endständigen Stirnseite und einer zweiten endständigen Stirnseite und einem dazwischen liegenden Wickelmantel vor, in dem die Anode, der Separator und die Kathode um eine Wickelachse A, die das axiale Zentrum des Wickels definiert, herum aufgewickelt sind.
c. Die Anode des Elektroden-Separator-Verbunds umfasst einen Anodenstromkollektor, der einen streifenförmigen Hauptbereich aufweist, der mit einer Schicht aus negativem Elektrodenmaterial beladen ist, sowie einen freien Randstreifen, der sich entlang eines Längsrands des Anodenstromkollektors erstreckt und der nicht mit dem negativen Elektrodenmaterial beladen ist.
d. Die Kathode des Elektroden-Separator-Verbunds umfasst einen Kathodenstromkollektor, der einen streifenförmigen Hauptbereich aufweist, der mit einer Schicht aus positivem Elektrodenmaterial beladen ist, sowie einen freien Randstreifen, der sich entlang eines Längsrands des Kathodenstromkollektors erstreckt und der nicht mit dem positiven Elektrodenmaterial beladen ist.
e. Die Anode und die Kathode sind innerhalb des Elektroden-Separator-Verbunds derart angeordnet, dass der freie Randstreifen des Anodenstromkollektors aus der ersten endständigen Stirnseite austritt und der freie Randstreifen des Kathodenstromkollektors aus der zweiten endständigen Stirnseite austritt.
f. Das Energiespeicherelement umfasst ein Kontaktblechteil, das
   - auf dem freien Randstreifen des Anodenstromkollektors aufsitzt und die erste endständige Stirnseite abdeckt und mit dem freien Randstreifen des Anodenstromkollektors stoffschlüssig verbunden ist oder
   - auf dem freien Randstreifen des Kathodenstromkollektors aufsitzt und die zweite endständige Stirnseite zumindest teilweise abdeckt und mit dem freien Randstreifen des Kathodenstromkollektors stoffschlüssig verbunden ist.
g. Der Stromkollektor, auf dessen Randstreifen das Kontaktblechteil aufsitzt, liegt in dem zylindrischen Wickel in einer spiralförmigen Anordnung vor und weist eine außenliegende Windung mit einem maximalen Radius R₁ auf.
h. Das Kontaktblechteil weist auf der von ihm abgedeckten Stirnseite ausgehend vom Schnittpunkt des Kontaktblechteils mit der Wickelachse eine maximale radiale Erstreckung Eₘₐₓ auf.
   Besonders zeichnet sich das erfindungsgemäße Energiespeicherelement (100) zusätzlich dadurch aus, dass
i. der von der außenliegenden Windung umfasste Bereich des Randstreifens zumindest abschnittweise radial nach innen umgebogen ist und
j. Eₘₐₓ < R₁ ist.

Durch diese Merkmalskombination ist gewährleistet, dass beispielsweise bei Verwendung von Kontaktblechteilen, deren Durchmesser kleiner ist als der Wickeldurchmesser, die außenliegende Windung dennoch stoffschlüssig mit dem Kontaktblechteil verbunden werden kann. Durch das radiale Umbiegen des Randstreifens wird die außenliegende Windung zumindest abschnittweise im Durchmesser reduziert, so dass auch der Längsrand des Randstreifens von dem Kontaktblechteil abgedeckt werden kann.

Besonders bevorzugt ist der von der außenliegenden Windung umfasste Bereich des Randstreifens über seine gesamte Länge radial nach innen umgebogen.

Zur Klarstellung: Der maximale Radius R₁ bezieht sich nicht auf den umgebogenen Randbereich, sondern auf einen nicht radial nach innen umgebogenen Bereich des Stromkollektors oder präziser der außenliegenden Windung des Stromkollektors. Der maximale Radius R₁ entspricht somit beispielsweise dem maximalen Radius der außenliegenden Windung im mit Elektrodenmaterial beschichteten Hauptbereich. In einer fertigen Zelle kann dieser leicht ermittelt werden, indem der maximale Durchmesser der außenliegenden Windung beispielsweise mittels eines CT-Scans ermittelt und durch 2 dividiert wird.

Mit Hilfe eines CT-Scans kann auch die Lage der Wickelachse A festgelegt werden. Beispielsweise können jeweils zwei Geraden orthogonal zueinander in zwei Querschnitte eines gewickelten, zylindrischen Elektroden-Separator-Verbunds gelegt werden, so dass sie den Wickel jeweils dort schneiden, wo er seinen maximalen Durchmesser aufweist. Diese Geraden schneiden sich jeweils im axialen Zentrum des Wickels und können so auch die Wickelachse A definieren.

Der freie Randstreifen eines Stromkollektors umfasst im Übrigen jeweils den Längsrand, entlang dem er sich erstreckt. Abhängig vom Deformationsgrad des Randstreifens nach dem radialen Umbiegen und dem Aufsetzen des Kontaktblechteil auf den Randstreifen kann das Kontaktblechteil auch nur auf dem Längsrand aufsitzen ohne andere Bereiche des Randstreifens unmittelbar zu kontaktieren.

Besonders bevorzugt ist nicht nur der von der außenliegenden Windung umfasste Bereich des Randstreifens über seine gesamte Länge radial nach innen umgebogen. Vielmehr weist das erfindungsgemäße Energiespeicherelement bevorzugt mindestens eines der folgenden zusätzlichen Merkmale a. und b. auf:
a. Der Stromkollektor, auf dessen Randstreifen das Kontaktblechteil aufsitzt, weist unmittelbar anschließend an die außenliegende Windung in Richtung der Wickelachse A *n* weitere Windungen mit einem maximalen Radius, der < R₁ und > Eₘₐₓ ist, auf, die jeweils einen Bereich des Randstreifens umfassen, der zumindest abschnittweise radial nach innen umgebogen ist.
b. *n* = 2 bis 30.

Es ist also bevorzugt, dass auch an die außenliegende Windung sich anschließende weitere Windungen einen radial nach innen umgebogenen Randbereich aufweisen können.

Auch hier ist es bevorzugt, dass die von der außenliegenden Windung umfassten Bereiche des Randstreifens über ihre gesamte Länge radial nach innen umgebogen sind.

Bevorzugt sind die unmittelbar vorstehenden Merkmale a. und b. in Kombination realisiert.

Unter einer Windung wird vorliegend ein vollständiger Umlauf des Stromkollektors von 360° um die Wickelachse A verstanden. Bei der außenliegenden Windung handelt es sich um die erste Windung des Wickels, ausgehend vom außenliegenden Ende des Stromkollektors. An diese schlie-ßen sich in Richtung der Wickelachse A weitere Windungen an. Ein Umlauf von 720° um die Achse A entspricht beispielsweise zwei vollen Windungen.

In bevorzugten Weiterbildungen zeichnet sich das erfindungsgemäße Energiespeicherelement durch mindestens eines der unmittelbar folgenden Merkmale a. bis e. aus:
a. Der Stromkollektor, auf dessen Randstreifen das Kontaktblechteil aufsitzt, weist unmittelbar anschließend an die außenliegende Windung in Richtung der Wickelachse A eine weitere Windung mit einem maximalen Radius R₂ auf, wobei R₂ < R₁ ist und Eₘₐₓ < R₂ ist und der von der Windung mit dem Radius R₂ umfasste Bereich des Randstreifens zumindest abschnittweise radial nach innen umgebogen ist.
b. Der Stromkollektor, auf dessen Randstreifen das Kontaktblechteil aufsitzt, weist unmittelbar anschließend an die Windung mit dem maximalen Radius R₂ in Richtung der Wickelachse A eine weitere Windung mit einem maximalen Radius R₃ auf, wobei R₃ < R₂ ist und Eₘₐₓ < R₃ ist und der von der Windung mit dem Durchmesser R₃ umfasste Bereich des Randstreifens oder zumindest abschnittweise radial nach innen umgebogen ist.
c. Der Stromkollektor, auf dessen Randstreifen das Kontaktblechteil aufsitzt, weist unmittelbar anschließend an die Windung mit dem maximalen Radius R₃ in Richtung der Wickelachse A eine weitere Windung mit einem maximalen Radius R₄ auf, wobei R₄ < R₃ ist und Eₘₐₓ < R₄ ist und der von der Windung mit dem Radius R₄ umfasste Bereich des Randstreifens zumindest abschnittweise radial nach innen umgebogen ist.
d. Der Stromkollektor, auf dessen Randstreifen das Kontaktblechteil aufsitzt, weist unmittelbar anschließend an die Windung mit dem maximalen Radius R₄ in Richtung der Wickelachse A eine weitere Windung mit einem maximalen Radius R₅ auf, wobei R₅ < R₄ ist und Eₘₐₓ < R₅ ist und der von der Windung mit dem Radius R₅ umfasste Bereich des Randstreifens zumindest abschnittweise radial nach innen umgebogen ist.
e. Der Stromkollektor, auf dessen Randstreifen das Kontaktblechteil aufsitzt, weist unmittelbar anschließend an die Windung mit dem maximalen Radius R₅ in Richtung der Wickelachse A eine weitere Windung mit einem maximalen Durchmesser R₆ auf, wobei R₆ < R₅ ist und Eₘₐₓ < R₆ ist und der von der Windung mit dem Radius R₆ umfasste Bereich des Randstreifens zumindest abschnittweise radial nach innen umgebogen ist.

In bevorzugten Ausführungsformen zeichnet sich das erfindungsgemäße Energiespeicherelement durch mindestens eines der folgenden zusätzlichen Merkmale a. bis c. aus:
a. Zwischen dem Kontaktblechteil und dem Randstreifen, auf dem das Kontaktblechteil aufsitzt, besteht mindestens eine stoffschlüssige Verbindung.
b. Bei der mindestens einen stoffschlüssigen Verbindung zwischen dem Kontaktblechteil und dem Randstreifen, auf dem das Kontaktblechteil aufsitzt, handelt es sich um eine Verschweißung oder eine Verlötung oder eine Verklebung.
c. Die mindestens eine stoffschlüssige Verbindung besteht zwischen dem Kontaktblechteil und dem von der außenliegenden Windung umfassten Bereich des Randstreifens.

Besonders bevorzugt besteht die mindestens eine stoffschlüssige Verbindung weiterhin auch zwischen dem Kontaktblechteil und mindestens einem weiteren Bereich des Randstreifens, der von einer Windung umfasst ist, die sich in Richtung Wickelachse an die außenliegende Windung anschließt, also beispielsweise mindestens einer der Windungen mit dem maximalen Radius R₂, R₃, R₄ und R₅.

Ideal ist natürlich, wenn möglichst viele Windungen des Stromkollektors stoffschlüssig mit dem Kontaktblechteil verbunden sind, beispielsweise alle der oben angeführten fünf äußeren Windungen mit den Maximalradien R₁ bis R₅.

Bevorzugt handelt es sich bei der mindestens einen stoffschlüssigen Verbindung um mindestens eine Schweißverbindung in Form einer Schweißnaht und/oder eines Schweißpunkts.

Besagte Verklebung kann realisiert werden, indem die Randstreifen und das Kontaktblechteil durch einen Klebstoff mit elektrisch leitenden Eigenschaften verbunden werden. Solche Klebstoffe sind beispielsweise aus der Leiterplattentechnik bekannt.

Besagte Lötverbindung kann gebildet werden, indem ein Lot aufgeschmolzen wird und in Kontakt mit dem Randstreifen und dem Kontaktblechteil erstarrt.

Das Kontaktblechteil kann grundsätzlich eine Vielzahl von Geometrien aufweisen. Besonders bevorzugt zeichnet es sich allerdings durch eines der folgenden Merkmale a. oder b. aus:
a. Das Kontaktblechteil ist als Scheibe mit kreisförmigem Umfang ausgebildet: Diese Ausführungsform ist besonders bevorzugt, da so die Geometrie des Kontaktblechteils der Geometrie der abzudeckenden Stirnseiten entspricht. Abweichungen von einer perfekten Kreisform sind natürlich denkbar, so kann die Scheibe beispielsweise Ausnehmungen im Randbereich aufweisen, die beispielsweise als Positionierungshilfen beim Auflegen des Kontaktblechteils auf die Stirnseite dienen können. Hervorzuheben ist, dass Eₘₐₓ bei zentraler Auflage der Scheibe auf der entsprechenden Stirnseite dem maximalen Radius der Scheibe entspricht.
b. Das Kontaktblechteil umfasst einen zentralen Bereich, an den sich Fortsätze anschließen, die sich in Richtung des Randes der Stirnseite erstrecken: Bei zentrierter Auflage des Kontaktblechteils auf der Stirnseite liegt das Zentrum des Kontaktblechs im Schnittpunkt von Kontaktblechebene mit der Wickelachse A. Bevorzugt handelt es sich bei den Fortsätzen um streifenförmige Fortsätze.

Weitere bevorzugte Merkmale a. bis f. sind im Folgenden gelistet:
a. Das Kontaktblechteil weist eine Dicke im Bereich von 50 µm bis 600 µm, bevorzugt im Bereich von 150 µm bis 350 µm, auf.
b. Das Kontaktblechteil weist zwei sich gegenüberliegenden Flachseiten auf und erstreckt sich im Wesentlichen nur in einer Dimension.
c. Das Kontaktblechteil ist derart dimensioniert, dass es mindestens 25 %, bevorzugt mindestens 50 %, besonders bevorzugt mindestens 75 %, der Stirnseite, aus der der mit ihm verbundene freie Randstreifen des jeweiligen Stromkollektors austritt, abdeckt.
d. Das Kontaktblechteil weist mindestens eine Durchbrechung, insbesondere mindestens ein Loch und/oder mindestens einen Schlitz, auf.
e. Das Kontaktblechteil weist mindestens eine Sicke auf, die auf einer Flachseite des Kontaktblechteils als längliche Vertiefung und auf der gegenüberliegenden Flachseite als längliche Erhöhung zu Tage tritt, wobei es bevorzugt ist, dass das Kontaktblechteil mit der Flachseite, welche die längliche Erhöhung trägt, auf dem freien Randstreifen des jeweiligen Stromkollektors aufsitzt.
f. Das Kontaktblechteil ist im Bereich der Sicke mit dem freien Randstreifen des Stromkollektors verschweißt, insbesondere über eine oder mehrere in der Sicke angeordnete Schweißnähte und/oder Schweißpunkte.

Besonders bevorzugt sind die Merkmale a., b., und c., oder die Merkmale a. bis d. in Kombination realisiert. In weiteren Ausführungsformen sind die Merkmale a., c., e. und f. oder die Merkmale a., c., d., e. und f. in Kombination realisiert.

Die möglichst großflächige Abdeckung der Stirnseite ist für das thermische Management des erfindungsgemäßen Energiespeicherelements von Bedeutung. Je größer die Abdeckung ist, desto eher ist es möglich, möglichst lange Abschnitte des ersten Längsrands des jeweiligen Stromkollektors zu kontaktieren. In Elektroden-Separator-Verbund gebildete Wärme kann so gut über das Kontaktblechteil abgeführt werden.

In Ausführungsformen des Kontaktblechteils mit den genannten Sicken kann es vorteilhaft sein, den Längsrand des Stromkollektors einer Vorbehandlung zu unterziehen, bevor das Kontaktblechteil aufgesetzt wird, um in den Längsrand zu den Sicken korrespondierende Vertiefungen einzubringen, die das Aufsetzen und ggf. auch das Positionieren des Kontaktblechteils erleichtern.

Abhängig vom Druck, der beim Aufsetzen des Kontaktblechteils auf den Stromkollektorrand ausgeübt wird, kann es darüber hinaus stets auch zu ungerichteten Deformationen des Längsrands kommen.

Das mindestens eine Loch und/oder der mindestens einen Schlitz können beispielsweise das Einfüllen von Elektrolyt erleichtern und/oder Spannungen in Folge thermischer Belastungen beim Verschweißen entgegenwirken.

### Gehäuse und Gehäuseverschluss

Das erfindungsgemäße Energiespeicherelement zeichnet sich weiterhin durch mindestens eines der folgenden Merkmale aus:
a. Das Energiespeicherelement umfasst ein luft- und flüssigkeitsdicht verschlossenes Gehäuse, das einen metallischen Gehäusebecher mit einer endständigen kreisförmigen Öffnung sowie einem kreisförmigen Boden und einen Deckel mit einem kreisförmigen Rand, welcher die kreisförmige Öffnung verschließt, umfasst, und das einen Innenraum umschließt, in dem der Elektroden-Separator-Verbund angeordnet ist.
b. Der Deckel ist als Deckelbaugruppe ausgebildet, die eine Metallscheibe und eine Polkappe, die in elektrischem sowie in unmittelbarem mechanischem Kontakt miteinander stehen.
c. Die Deckelbaugruppe umfasst eine Dichtung, die auf ihren Rand aufgezogen ist.

Die unmittelbar vorgenannten Merkmale a. bis c. sind bevorzugt in Kombination realisiert.

Zum Schließen der kreisförmigen Öffnung des Gehäusebechers mittels des Deckels kann auf herkömmliche Verschlussverfahren zurückgegriffen werden. Besonders bevorzugt ist der Verschluss durch Bördelung. Im Rahmen dieses Prozesses wird der Rand des Gehäusebechers radial nach innen umgebogen, gleichzeitig wird die Dichtung auf die oben beschriebene Art komprimiert.

In einer bevorzugten Weiterbildung zeichnet sich das Energiespeicherelement entsprechend durch die folgenden Merkmale a. und b. aus:
a. Der Gehäusebecher umfasst in axialer Abfolge den Boden, einen Zentralabschnitt und einen Verschlussabschnitt, wobei
   - der Zentralabschnitt zylindrisch ausgebildet ist und in dem Zentralabschnitt der Wickelmantel des als Wickel ausgebildeten Elektroden-Separator-Verbunds mit der Innenseite des Gehäusebechers in Kontakt steht, und
   - in dem Verschlussabschnitt die ringförmige Dichtung in einem Presskontakt mit dem Rand des Deckels und der Innenseite des Gehäusebechers steht, und
b. der Gehäusebecher weist in dem Verschlussabschnitt einen die kreisförmige Öffnung definierenden Öffnungsrand auf, der radial nach innen über den von der Dichtung umschlossenen Rand des Deckels umgebogen ist und der den Deckel einschließlich der Dichtung in der kreisförmigen Öffnung des Gehäusebechers formschlüssig fixiert.

Der Elektroden-Separator-Verbund steht mit der Innenseite des Gehäusebechers bevorzugt in unmittelbarem Kontakt. Besonders bevorzugt liegt er unmittelbar an der Innenseite des Gehäusebechers an. In einigen Ausführungsformen kann es allerdings vorgesehen sein, die Innenseite, beispielsweise mittels einer Folie, elektrisch zu isolieren. In diesem Fall steht der Elektroden-Separator-Verbunds in Kontakt über die Folie mit der Innenwand in Kontakt.

Die oben erwähnte Wickelachse A fällt bevorzugt zusammen mit dem axialen Zentrum des Gehäuses, insbesondere des zylindrischen Zentralabschnitts. Die Wickelachse A kann somit bevorzugt auch festgelegt werden als Achse, die durch das Zentrum des kreisförmigen Bodens des Gehäuses und das Zentrum des Deckels mit dem kreisförmigen Rand führt.

Besonders bevorzugt zeichnet sich das erfindungsgemäße Energiespeicherelement durch mindestens eines der folgenden Merkmale a. bis c. aus:
a. Der Zentralabschnitt und der Verschlussabschnitt werden durch eine Einbuchtung, welche die Außenseite des Gehäusebechers ringförmig umläuft, getrennt.
b. Der Gehäusebecher weist in dem Zentralabschnitt und dem Verschlussabschnitt einen identischen maximalen Außendurchmesser auf.
c. Im Bereich der Einbuchtung ist der Außendurchmesser des Gehäusebechers um das 4- bis 20-fache der Wandstärke des Gehäusebechers in diesem Bereich reduziert.

Es ist bevorzugt, dass zumindest die unmittelbar vorstehenden Merkmale a. und b. in Kombination realisiert sind. Besonders bevorzugt sind alle drei unmittelbar vorstehenden Merkmale a. bis c. in Kombination realisiert.

Bevorzugt liegt die ringförmige Dichtung in dem Verschlussabschnitt komprimiert vor. Sie wird bevorzugt radial gegen den kreisförmigen Rand des Deckels gepresst.

Die Wahl des Gehäuses ist nicht zwingend ein erfindungswesentliches Merkmal. Es ist auch möglich, einen Deckel durch Verschweißung in der Öffnung des Gehäusebechers zu fixieren und eine Poldurchführung im Deckel oder an einer anderen Stelle des Gehäuses vorzusehen.

Der Boden des Gehäusebechers ist bevorzugt kreisförmig ausgebildet. Der Gehäusebecher wird meist durch Tiefziehen gebildet. Es ist aber auch möglich, den Becher durch Einschweißen eines Bodens in ein rohrförmiges Halbteil zu bilden.

Bevorzugt ist das erfindungsgemäße Energiespeicherelement als zylindrische Rundzelle ausgebildet. Seine Höhe liegt bevorzugt im Bereich von 50 mm bis 150 mm. Sein Durchmesser liegt bevorzugt im Bereich von 15 mm bis 60 mm. Zylindrische Rundzellen mit diesen Formfaktoren eignen sich beispielsweise zur Stromversorgung elektrischer Antriebe von Kraftfahrzeugen.

In vielen Fällen sitzt eine der Stirnseiten des Elektroden-Separator-Verbunds nach dem Einschieben des Elektroden-Separator-Verbunds unmittelbar auf dem Boden des Gehäusebechers auf. Es kann dann erforderlich sein, den aus dieser Stirnseite austretenden freien Randstreifen des Stromkollektors mit dem Gehäuseboden zu kontaktieren. Dies kann beispielsweise durch Verschweißung mittels eines Lasers durch den Gehäuseboden hindurch erfolgen. In anderen möglichen Ausführungsformen wird auf diese Stirnseite vor Schritt e. ein passendes Kontaktblechteil aufgebracht, so dass nach dem Einbringen nur noch dieses Kontaktblechteil mit dem Gehäusebecher bzw. dessen Boden kontaktiert werden muss, beispielsweise über eine Schweißverbindung. Die Herstellung der Schweißverbindung zwischen dem Kontaktblechteil und dem Boden kann beispielsweise durch Widerstandsschweißen erfolgen. Eine Schweißelektrode kann hierzu durch einen axialen Hohlraum im Wickel geführt werden, eine zweite Schweißelektrode kann von außen an den Boden gedrückt werden.

Das in Richtung der Öffnung des Gehäusebechers weisende Kontaktblechteil wird bevorzugt elektrisch mit dem Deckel verbunden, beispielsweise durch unmittelbare Verschweißung an eine Komponente des Deckels oder über einen elektrischen Leiter. Wird der Deckel in die Öffnung eingeschweißt, so wird ein elektrischer Kontakt zu einer Poldurchführung benötigt.

Vor oder nach dem Gehäuseverschluss kann der Elektroden-Separator-Verbund mit einem geeigneten Elektrolyten getränkt werden. In der zweiten Variante muss der Elektrolyt über ein geeignetes Loch im Gehäuse eindosiert werden, welches anschließend verschlossen wird.

### Ausführungsform als Lithium-lonen-Energiespeicherelement

In einer besonders bevorzugten Ausführungsform der Erfindung basiert das erfindungsgemäße Energiespeicherelement auf Lithium-lonen-Technologie.

Für die Elektroden des Energiespeicherelements können im Grunde sämtliche für sekundäre Lithium-lonen-Zellen bekannten Elektrodenmaterialien verwendet werden.

In den negativen Elektroden können als Aktivmaterialien Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Alternativ oder zusätzlich kann auch Lithiumtitanat (Li₄Ti₅O₁₂) oder ein Derivat desselben in der negativen Elektrode enthalten sein, bevorzugt ebenfalls in Partikelform. Weiterhin kann die negative Elektrode als Aktivmaterial mindestens ein Material aus der Gruppe mit Silizium, Aluminium, Zinn, Antimon oder eine Verbindung oder Legierung dieser Materialien, die Lithium reversibel ein- und auslagern kann, beispielsweise Siliziumoxid (insbesondere SiOₓ mit 0 < x < 2), enthalten, gegebenenfalls in Kombination mit Aktivmaterialien auf Kohlenstoffbasis. Zinn, Aluminium, Antimon und Silizium in der Lage, mit Lithium intermetallische Phasen zu bilden. Die Kapazität zur Aufnahme von Lithium übersteigt dabei, insbesondere im Fall von Silizium, die von Graphit oder vergleichbaren Materialien um ein Vielfaches. Oft werden Mischungen aus Silizium- und Kohlenstoff-basierten Speichermaterialien eingesetzt. Weiterhin eignen sich auch dünne Anoden aus metallischem Lithium.

Für die positiven Elektroden kommen als Aktivmaterialien beispielsweise Lithium-Metalloxid-Verbindungen und Lithium-Metallphosphat-Verbindungen wie LiCoOz und LiFePO₄ in Frage. Weiterhin gut geeignet sind insbesondere Lithiumnickelmangancobaltoxid (NMC) mit der Summenformel LiNiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}Al_{0.05})_{0.89}O₂ oder Li₁₊ₓM-O Verbindungen und/oder Mischungen der genannten Materialien können eingesetzt werden. Auch die kathodischen Aktivmaterialien werden bevorzugt partikulär eingesetzt.

Daneben enthalten die Elektroden eines Energiespeicherelements bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), (Li-)Polyacrylat, Styrol-Butadien-Kautschuk oder Carboxymethylzellulose oder auch Mischungen unterschiedlicher Binder. Übliche Leitmittel sind Ruß, feine Grafite, Kohlenstofffasern, Carbon-Nanotubes und Metallpulver.

Das Energiespeicherelement umfasst bevorzugt einen Elektrolyten, im Falle einer Lithium-Ionen-Zelle insbesondere einen Elektrolyten auf der Basis mindestens eines Lithiumsalzes wie beispielsweise Lithiumhexafluorophosphat (LiPF₆), das in einem organischen Lösungsmittel gelöst vorliegt (z. B. in einer Mischung organischer Carbonate oder einem cyclischen Ether wie THF oder einem Nitril). Andere einsetzbare Lithium-Salze sind beispielsweise Lithiumtetrafluoroborat (LiBF₄), Lithiumbis(trifluoromethansulfonyl)imid (LiTFSI), Lithiumbis(fluorosulfonyl)imid (LiFSI) und Lithium-bis(oxalato)borat (LiBOB).

Die Nennkapazität eines als zylindrische Rundzelle ausgebildeten Energiespeicherelements auf Lithium-Ionen-Basis beträgt bevorzugt bis zu 15000 mAh. Mit dem Formfaktor von 21 × 70 hat die Rundzelle in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 x 65 hat die Rundzelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

### Ausführungsform auf Natrium-Ionen-Basis

In weiteren Ausführungsformen kann es sich bei dem Energiespeicherelement auch um eine Natrium-Ionen-Zelle, eine Kalium-Ionen-Zelle, eine Calzium-Ionen-Zelle, eine Magnesium-Ionen-Zelle oder eine Aluminium-Ionen-Zelle handeln. Unter diesen Varianten sind Energiespeicherelemente mit Natrium-Ionen-Zellchemie besonders bevorzugt.

Bevorzugt umfasst das Energiespeicherelement auf Basis von Natrium-Ionen einen Elektrolyten, der mindestens eines der folgenden Lösungsmittel und mindestens eines der folgenden Leitsalze umfasst:
Als Lösungsmittel kommen insbesondere organische Carbonate, Ether, Nitrile und Mischungen daraus in Frage. Bevorzugte Beispiele sind:
- Carbonate: Propylencarbonat (PC), Ethylencarbonat-Propylencarbonat (EC-PC), Propy-Iencarbonat-Dimethylcarbonat-Ethylmethylcarbonat (PC-DMC-EMC), Ethylencarbonat-Diethylcarbonat (EC-DEC), Ethylencarbonat-Dimethylcarbonat (EC-DMC), Ethylencarbonat-Ethylmethylcarbonat (EC-EMC), Ethylencarbonat-Dimethylcarbonat-Ethylmethylcarbonat (EC-DMC-EMC), Ethylencarbonat-Dimethylcarbonat-Diethylcarbonat (EC-DMC-DEC)
- Ether: Tetrahydrofuran (THE), 2-Methyltetrahydrofuran, Dimethylether (OME), 1,4-dioxane (DX), 1,3-dioxolane (DOL), Diethylenglykoldimethylether (DEGDME), Tetraethyl-englykoldimethylether (TEGDME)
- Nitrile: Acetonitril (ACN), Adiponitril (AON), y-Butyrolactone (GBL)

Weiterhin kommen auch Trimethylphosphat (TMP) und Tris(2,2,2-trifluoroethyl)phosphat (TFP) in Frage.

Bevorzugte Leitsalze sind:
NaPF₆, Natrium-difluoro(oxalato)borat (NaBOB), NaBF₄, Natriumbis(fluorosulfonyl)imid (NaFSI), Natrium-2-trifluoromethyl-4,5-dicyanoimidazol (NaTDI), Natrium-bis(trifluoromethansulfonyl)imid (NaTFSI), NaAsF₆, NaBF₄, NaClO₄, NaB(C₂O₄)₂, NaP(C₆H₄O₂)₃; NaCF₃SO₃, Natriumtriflat (NaTf) und Et₄NBF₄.

Dem Elektrolyten können in bevorzugten Ausführungsformen Additive zugesetzt sein. Beispiele bevorzugter Additive, insbesondere zur Stabilisierung, sind die folgenden:
Fluoroethylencarbonat (FEC), Transdifluoroethylencarbonat (DFEC), Ethylensulfit (ES), Vinylencarbonat (VC), Bis(2,2,2-trifluoroethyl)ether (BTFE), Natrium-2-trifluoromethyl-4,5-dicyanoimidazol (NaTDI), Natriumbis(fluorosulfonyl)imide (NaFSI), Aluminumchlorid (AlCl3), Ethylensulfat (DTD), Natriumdifluorophosphat (NaPO₂F₂), Natriumdifluoro(oxalato)borat (NaODFB), Natriumdifluorobisoxalatophosphat (NaDFOP) und Tris(trimethylsilyl)borat (TMSB).

Bei dem negativen Elektrodenmaterial eines Energiespeicherelements auf Basis von Natrium-lonen handelt es sich bevorzugt um mindestens eines der folgenden Materialien:
- Kohlenstoff, besonders präferiert Hardcarbon (rein oder mit Stickstoff- und/oder Phosphor-Dotierung) oder Softcarbon oder Graphene-basierte Materialien (mit N-dotierung); Kohlenstoffnanotubes, Graphit
- Phosphor oder Schwefel (Konversionsanode)
- Polyanionen: Na₂Ti₃O₇, Na₃Ti₂(PO₄)₃, TiP₂O₇, TiNb₂O₇, Na-Ti-(PO₄)₃, Na-V-(PO₄)₃
- Preussisch Blau: Na-arme Variante (für Systeme mit wässrigem Elektrolyt)
- Übergangsmetalloxide: V₂O₅, MnO₂, TiOz, Nb₂O₃, Fe₂O₃, Na₂Ti₃O₇, NaCrTiO₄, Na₄Ti₃O₁₂
- MXene mit M= Ti, V, Cr, Mo oder Nb und A = Al, Si, und Ga sowie X= C und/oder N, z.B. Ti₃C₂
- Organisch: z.B. Na-Terephthalate (Na₂C₈H₂O₄)

Alternativ kann anodenseitig grundsätzlich auch eine Na-Metallanode zum Einsatz kommen.

Bei dem positiven Elektrodenmaterial eines Energiespeicherelements auf Basis von Natrium-Ionen handelt es sich beispielsweise um mindestens eines der folgenden Materialien:
- Polyanionen: NaFePO₄ (Triphylit-Typ), Na₂Fe(P₂O₇), Na₄Fe₃(PO₄)₂(P₂O₇), Na₂FePO₄F, Na/Na₂[Fe_{1/2}Mn_{1/2}]PO₄F, Na₃V₂(PO₄)₂F₃, Na₃V₂(PO₄)₃, Na₄(CoMnNi)₃(PO₄)₂P₂O₇, NaCoPO₄, Na₂CoPO₄F
- Silikate: Na₂MnSiO₄, Na₂FeSiO₄
- Schichtoxide: NaCoO₂, NaFeO₂, NaNiO₂, NaCrO₂, NaVO₂, NaTiO₂, Na(FeCo)O₂, Na(Ni-FeCo)₃O₂, Na(NiFeMn)O₂, and Na(NiFeCoMn)O₂, Na(NiMnCo)O₂

Daneben enthalten die Elektroden eines erfindungsgemäßen Energiespeicherelements bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei die Aktivmaterialien bevorzugt partikulär eingesetzt werden und benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), (Na-)Polyacrylat, Styrol-Butadien-Kautschuk, (Na)-Alginat oder Carboxymethylzellulose oder auch Mischungen unterschiedlicher Binder. Übliche Leitmittel sind Ruß, feine Grafite, Kohlenstofffasern, Carbon-Nanotubes und Metallpulver.

Besonders bevorzugt bestehen bei einem Energiespeicherelement auf Basis von Natrium-Ionen-Technologie sowohl der Anoden- als auch der Kathodenstromkollektor aus Aluminium oder einer Aluminiumlegierung. Auch das Gehäuse und die Kontaktplatten sowie ggf. vorhandene weitere Stromleiter innerhalb des Gehäuses können aus Aluminium oder aus der Aluminiumlegierung bestehen.

### Bevorzugte Ausführungsformen des Kontaktblechteils

Grundsätzlich kann ein Kontaktblechteil entweder mit dem Anodenstromkollektor oder mit dem Kathodenstromkollektor elektrisch verbunden sein.

In einer besonders bevorzugten Ausführungsform der Erfindung zeichnet sich ein mit dem Anodenstromkollektor elektrisch verbundenes Kontaktblechteil durch mindestens eines der folgenden Merkmale a. und b. aus:
a. Das Kontaktblechteil besteht aus Nickel oder Kupfer oder Titan oder eine Nickel- oder Kupfer- oder Titanlegierung oder Edelstahl, beispielsweise vom Typ 1.4303 oder 1.4404 oder vom Typ SUS304, oder aus nickelplattiertem Kupfer.
b. Das Kontaktblechteil besteht aus dem gleichen Material wie der Anodenstromkollektor.

In einer weiteren besonders bevorzugten Ausführungsform der Erfindung zeichnet sich ein mit dem Kathodenstromkollektor elektrisch verbundenes Kontaktblechteil durch mindestens eines der folgenden Merkmale a. und b. aus:
a. Das Kontaktblechteil besteht aus Aluminium oder einer Aluminiumlegierung.
b. Das Kontaktblechteil besteht aus dem gleichen Material wie der Anodenstromkollektor.

### Bevorzugte Ausgestaltung des Elektroden-Separator-Verbunds

Die Anode, die Kathode und der Separator oder die Separatoren der erfindungsgemäßen Zelle weisen bevorzugt die folgenden Dimensionen auf:
- Eine Länge im Bereich von 0,5 m bis 25 m
- Eine Breite im Bereich 40 mm bis 145 mm

In dem als Wickel ausgebildeten Elektroden-Separator-Verbund liegen die bandförmige Anode, die bandförmige Kathode und der oder die bandförmigen Separatoren bevorzugt spiralförmig aufgewickelt vor. Zur Herstellung des Elektroden-Separator-Verbunds werden die bandförmigen Elektroden und der oder die bandförmigen Separatoren in der Regel einer Wickelvorrichtung zugeführt und in dieser bevorzugt um die Wickelachse A herum spiralförmig aufgewickelt. Eine Verklebung der Elektroden und der Separatoren oder eine Kontaktierung bei erhöhten Temperaturen ist hierbei meist nicht erforderlich. In einigen Ausführungsformen werden die Elektroden und der Separator oder die Separatoren auf einen zylindrischen oder hohlzylindrischen Wickelkern aufgewickelt, der auf einem Wickeldorn sitzt und nach dem Wickeln im Wickel verbleibt.

Der Wickelmantel kann beispielsweise durch eine Kunststofffolie oder ein Klebeband gebildet sein. Es ist auch möglich, dass der Wickelmantel durch eine oder mehrere Separatorwindungen gebildet ist.

### Bevorzugte Ausgestaltungen der Stromkollektoren

Die Stromkollektoren des erfindungsgemäßen Energiespeicherelements dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert.

Die Stromkollektoren weisen bevorzugt im Wesentlichen die gleichen Längen und Breiten wie die Anoden und Kathoden des erfindungsgemäßen Energiespeicherelements auf.

Im Falle eines als Lithium-Ionen-Zelle ausgebildeten erfindungsgemäßen Energiespeicherelements eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle. Als Kupferlegierung können insbesondere Werkstoffe vom Typ EN CW-004A bzw. EN CW-008A mit einem Kupferanteil von mindestens 99,9% eingesetzt werden. Als Nickellegierungen kommen insbesondere Legierungen vom Typ NiFe, NiCu, CuNi, NiCr und NiCrFe in Frage. Als Nickellegierungen kommen insbesondere Legierungen vom Typ NiFe, NiCu, CuNi, NiCr und NiCrFe in Frage. Auch Edelstahl kommt grundsätzlich in Frage, beispielsweise vom Typ 1.4303 oder 1.4404 oder vom Typ SUS304.

Als Metall für den Kathodenstromkollektor eignen sich im Falle eines als Lithium-Ionen-Zelle ausgebildeten erfindungsgemäßen Energiespeicherelements insbesondere Aluminium oder auch andere elektrisch leitfähige Materialien, darunter auch Aluminiumlegierungen.

Geeignete Aluminiumlegierungen für den Kathodenstromkollektor sind beispielsweise Al-Legierungen vom Typ 1235, 1050, 1060, 1070, 3003, 5052, Mg3, Mg212 (Serie 3000) und GM55. Weiterhin geeignet sind AlSi, AlCuTi, AlMgSi, AISiMg, AlSiCu, AlCuTiMg und AlMg. Der Aluminiumanteil besagter Legierungen liegt bevorzugt oberhalb von 99,5 %.

Bevorzugt handelt es sich bei dem Anodenstromkollektor und/oder dem Kathodenstromkollektor jeweils um eine bandförmige Metallfolie mit einer Dicke im Bereich von 4 µm bis 30 µm.

Neben Folien können als Stromkollektoren allerdings auch andere bandförmige Substrate wie metallische oder metallisierte Vliese oder offenporige metallische Schäume oder Streckmetalle verwendet werden.

Die Stromkollektoren sind bevorzugt beidseitig mit dem jeweiligen Elektrodenmaterial beladen.

### Bevorzugte Ausgestaltung der Separatoren

Bei den Separatoren handelt es sich bevorzugt um Bänder aus mikroporösen Plastikfolien, beispielsweise aus einem Polyolefin. Gegebenenfalls können die Separatoren durch keramische Zusätze oder Beschichtungen gegenüber thermischen Belastungen stabilisiert werden.

Es ist bevorzugt, dass die Längsränder des oder der Separatoren die Stirnseiten des als Wickel ausgebildeten Elektroden-Separator-Verbunds bilden.

### Mögliche Ausgestaltungen der Dichtung

Es ist bevorzugt, dass sich das erfindungsgemäße Energiespeicherelement durch mindestens eines der unmittelbar folgenden Merkmale a. und b. auszeichnet:
a. Die Dichtung besteht aus einem Kunststoffmaterial, das einen Schmelzpunkt > 200 °C, bevorzugt > 300 °C, besonders bevorzugt einen Schmelzpunkt > 300 °C und < 350 °C, aufweist.
b. Bei dem Kunststoffmaterial handelt es sich um ein Polyetheretherketon (PEEK), ein Polyimid (PI), ein Polyphenylensulfid (PPS) oder ein Polytetrafluorethylen (PTFE) oder ein Polybutylenterephthalat (PBT).

Es ist bevorzugt, dass die unmittelbar vorstehenden Merkmale a. und b. in Kombination realisiert sind.

### KURZBESCHREIBUNG DER ZEICHNUNGEN

Weitere Merkmale und Vorteile der Erfindung ergeben sich aus den Ansprüchen und aus der nachfolgenden Beschreibung von bevorzugten Ausführungsbeispielen der Erfindung in Verbindung mit den Zeichnungen. Die einzelnen Merkmale können dabei jeweils für sich oder in Kombination miteinander verwirklicht sein.

In den Zeichnungen zeigen schematisch:
- Fig. 1 illustriert anhand zweier Querschnittsansichten eines Elektroden-Separator-Verbunds für ein erfindungsgemäßes Energiespeicherelement den Gegenstand der Erfindung.
- In Fig. 2 ist eine Ausführungsform eines für die Erfindung geeigneten Kontaktblechteils dargestellt.
- In Fig. 3 ist eine weitere Ausführungsform eines für die Erfindung geeigneten Kontaktblechteils dargestellt.
- In Fig. 4 ist eine Draufsicht auf den freien Randstreifen eines Stromkollektors, der aus einer Stirnseite austritt, dargestellt.
- In Fig. 5 ist eine Stirnseite eines gewickelten Elektroden-Separator-Verbunds dargestellt, aus der der freie Randstreifen eines Anodenstromkollektors austritt (Querschnittsdarstellung).
- In Fig. 6 ist ein erfindungsgemäßes Energiespeicherelement im Querschnitt dargestellt.
- In Fig. 7 ist der Aufbau eines Elektroden-Separator-Verbunds dargestellt.

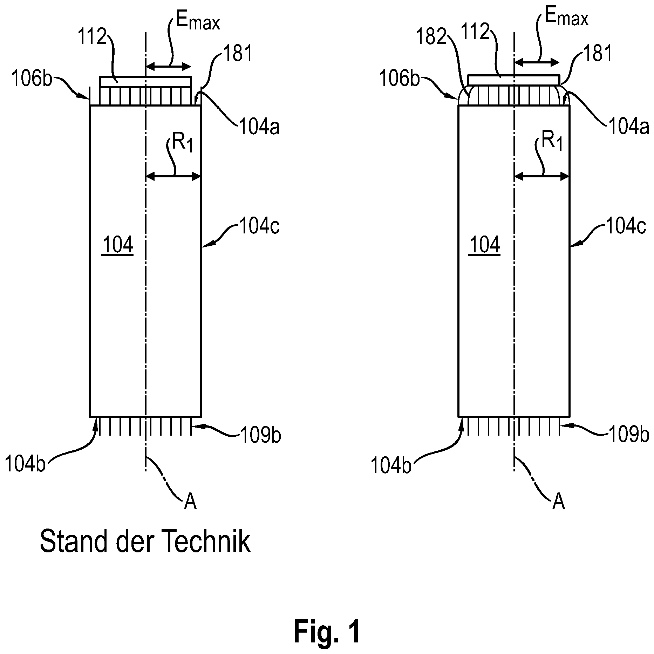

Die in **Fig. 1** schematisch dargestellte Elektroden-Separator-Verbünde 104 liegen jeweils in Form eines zylindrischen Wickels mit einer ersten endständigen Stirnseite 104a und einer zweiten endständigen Stirnseite 104b und einem dazwischen liegenden Wickelmantel 104c vor. Sie umfassen jeweils neben einer Anode zwei Separatoren und eine Kathode, die um eine Wickelachse A, die das axiale Zentrum des Wickels definiert, herum aufgewickelt sind. Diese Komponenten sind nicht separat dargestellt. Aus den Stirnseiten ragen die blanken Randstreifen der zu den Elektroden gehörigen Stromkollektoren heraus, aus der Stirnseite 104a der Randstreifen 106b des Anodenstromkollektors und aus der Stirnseite 104b der Randstreifen 109b des Kathodenstromkollektors. Diese sind frei von Elektrodenmaterial und stehen für eine elektrische Kontaktierung zu einem Kontaktblechteil 112 zur Verfügung.

Der links dargestellte Wickel illustriert das der Erfindung zugrunde liegende Problem. Aus Sicherheitsgründen wird ein scheibenförmiges Kontaktblechteil 112 gewählt, dessen Durchmesser geringer ist als der maximale Durchmesser des Wickels. Dessen maximaler Radius R₁ ist entsprechend größer als die maximale radiale Erstreckung Eₘₐₓ des Kontaktblechteils, ausgehend vom Schnittpunkt des Kontaktblechteils 112 mit der Wickelachse A. Bei aufgesetztem Wickel wird die außenliegende Windung 181 bzw. der von dieser umfasste Abschnitt des Randstreifens 106b nicht von dem Kontaktblechteil 112 erfasst.

Anders hingegen bei dem rechts dargestellten Wickel. Hier sind die von der außenliegenden Windung 181 und der unmittelbar sich anschließenden Windung 182 umfassten Abschnitte des Randstreifens 106b radial nach innen umgebogen, so dass die Windung 181 unmittelbar an der Unterseite des Kontaktblechteils 112 anliegt. In der Folge ist der Wickel thermisch und elektrisch besser angebunden.

Die dargestellten Wickel können beispielsweise für Zellen vom Typ 21700 vorgesehen sein. In diesem Fall beträgt R₁ beispielsweise bei 10 ± 0,8 mm während Eₘₐₓ beispielsweise 9,75 mm ± 0,025 mm beträgt.

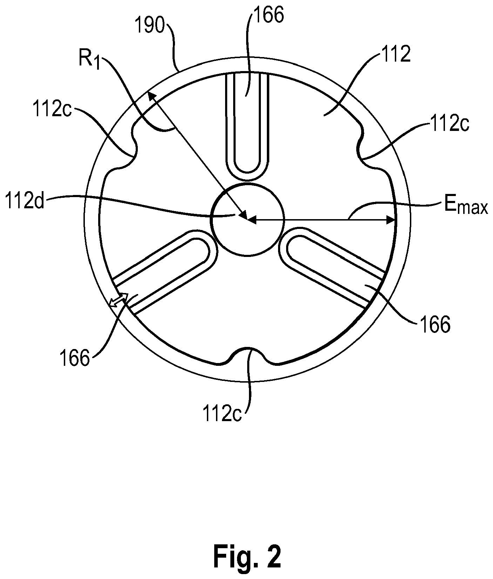

Das in **Fig. 2** dargestellte Kontaktblechteil 112 ist als Scheibe mit kreisförmigem Umfang ausgebildet, wobei die Scheibe drei Ausnehmungen 112c im Randbereich aufweist, die beispielsweise als Positionierungshilfen beim Auflegen des Kontaktblechteils 112 auf eine Stirnseite eines Elektroden-Separator-Verbunds dienen können. Die Scheibe weist bevorzugt eine Dicke im Bereich von 50 µm bis 600 µm auf. Weiterhin weist die Scheibe eine zentrale kreisrunde Durchbrechung 112d auf, die beim Einfüllen von Elektrolyt hilfreich sein kann. Die Scheibe umfasst drei langgestreckte Sicken 166 in sternförmiger Anordnung. Im Bereich dieser Sicken 166 kann die Verschweißung mit einem Randstreifen eines Stromkollektors erfolgen.

Die Linie 190 stellt den möglichen Verlauf des Randes einer endständigen Stirnseite eines Wickels aus Elektroden und Separatoren dar. Ein freier Randstreifen einer außenliegenden Windung eines Stromkollektors, der in dem kreisringförmigen Bereich zwischen dem Rand der endständigen Stirnseite und dem äußeren Rand des Kontaktblechteils 112 aus dieser Stirnseite austritt, kann von dem Kontaktblechteil 112 nur dann erfasst werden, wenn er radial nach innen umgebogen wird.

Hervorzuheben ist, dass Eₘₐₓ bei zentraler Auflage der Scheibe auf einer entsprechenden Stirnseite dem maximalen Radius der Scheibe entspricht.

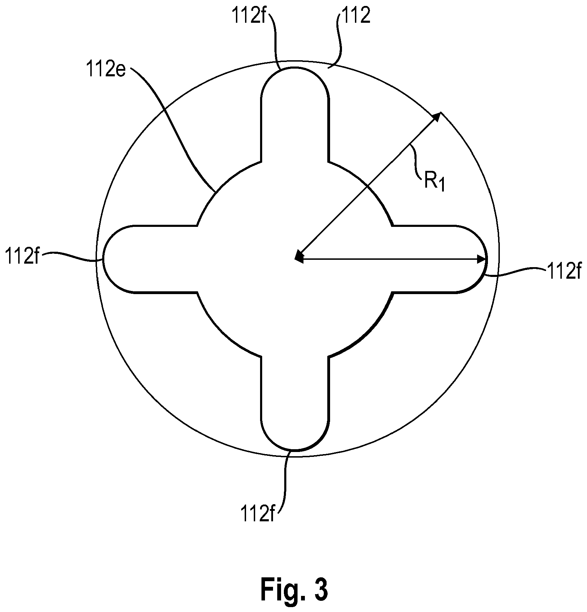

Das in **Fig. 3** dargestellte Kontaktblechteil 112 umfasst einen zentralen Bereich 112e, an den sich vier streifenförmige Fortsätze 112f anschließen, die sich, wenn das Kontaktblech 112f auf einer Stirnseite aufsitzt, in Richtung des Randes der Stirnseite erstrecken. Bei zentrierter Auflage des Kontaktblechteils auf der Stirnseite liegt das Zentrum des Kontaktblechs im Schnittpunkt der Wickelachse A mit der Kontaktblechebene. Zur Erläuterung der Erfindung ist isoliert die außenliegenden Windung 181 bzw. der von der Windung umfasste Bereich eines unbeschichteten Randstreifens eines Stromkollektors dargestellt. Die Windung 181 hat ihren größten Radius R₁ an ihrem äußeren Ende, wie alle übrigen (hier nicht dargestellten) Windungen im Übrigen auch. Ebenfalls dargestellt ist die maximale radiale Erstreckung Eₘₐₓ des Kontaktblechteils 112, ausgehend vom Schnittpunkt des Kontaktblechteils 112 mit der Wickelachse.

Das Kontaktblechteil 112 erstreckt sich im Wesentlichen nur in einer Dimension und weist bevorzugt eine Dicke im Bereich von 50 µm bis 600 µm auf.

Im Bereich der streifenförmigen Fortsätze können Sicken ähnlich denen in Fig. 3 vorgesehen sein, in denen das Kontaktblechteil mit dem freien Randstreifen eines Stromkollektors verschweißt werden kann.

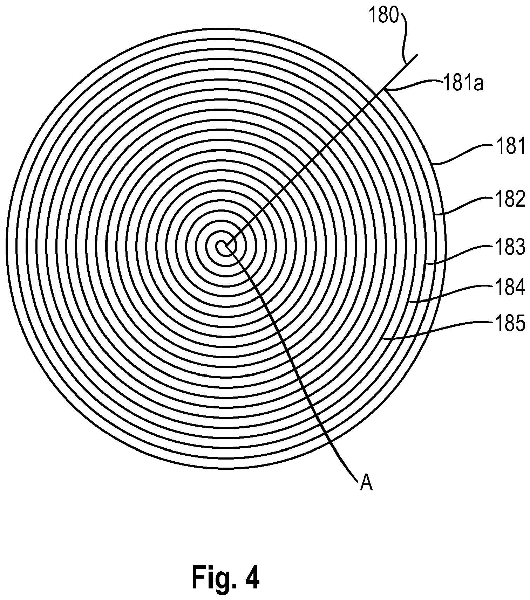

In **Fig. 4** ist eine Draufsicht auf den freien Randstreifen eines Stromkollektors, der aus einer Stirnseite austritt, dargestellt. Hervorgehoben sind die äußeren Windungen 181 bis 185, unter denen ein jeweils vollständiger Umlauf des Stromkollektors von 360° um die Wickelachse A verstanden wird. So beginnt die äußerste Windung 181 an ihrem Ende 181a und endet an der Linie 180 nach einem vollen Umlauf von 360°. Unmittelbar anschließend folgt die Windung 182, an welche sich dann die Windungen 183 bis 185 anschließen.

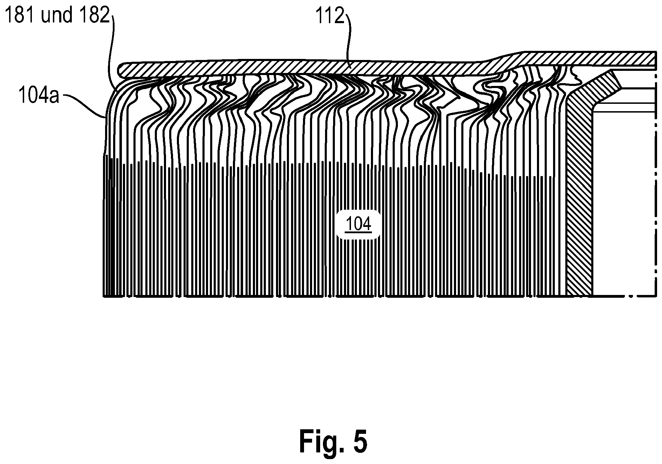

In **Fig. 5** ist im Querschnitt eine Stirnseite eines gewickelten Elektroden-Separator-Verbunds 104 dargestellt, aus der der freie Randstreifen 106b eines Anodenstromkollektors 106 austritt. Die äußeren beiden Windungen 181 und 182 sind radial nach innen umgebogen und liegen an der Unterseite des Kontaktblechteils unmittelbar an.

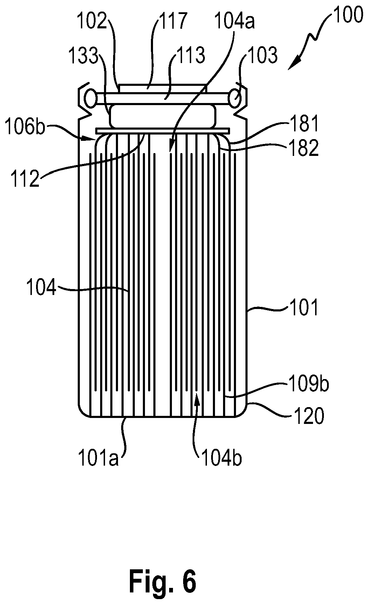

Das in **Fig. 6** dargestellte Energiespeicherelement 100 umfasst den Elektroden-Separator-Verbund 104, der in Form eines zylindrischen Wickels mit zwei endständigen Stirnseiten und einem dazwischen liegenden Wickelmantel vorliegt. Aus der endständigen Stirnseite 104a tritt der freie Randstreifen 106b des Anodenstromkollektors 106 aus. Dieser ist nicht mit Elektrodenmaterial beladen und durch Verschweißung mit dem Kontaktblechteil 112 verbunden, das auf dem Randstreifen 106b aufsitzt und den größten Teil der erste endständigen Stirnseite 104a abdeckt.

Weiterhin umfasst das Energiespeicherelement 100 ein luft- und flüssigkeitsdicht verschlossenes Gehäuse, das den metallischen Gehäusebecher 101 mit einer endständigen kreisförmigen Öffnung und den Deckel 102, welche die kreisförmige Öffnung verschließt, umfasst. Der Deckel 102 umfasst die Metallscheibe 113, deren Unterseite den Innenraum des Gehäuses begrenzt, sowie die Polkappe 117, die unmittelbar auf der Metallscheibe 113 aufsitzt und mit dieser in elektrischem Kontakt steht. Der elektrische Leiter 133 verbindet das Kontaktblechteil 112 und den Deckel 102.

Das Gehäuse umfasst weiterhin die Kunststoffdichtung 103, welche den Rand des Deckels 102 umschließt und die metallischen Komponenten des Deckels 102 von dem Gehäusebecher 101 elektrisch isoliert. Gleichzeitig trägt sie dazu bei, das Gehäuse abzudichten.

Die von den außenliegenden Windungen 181 und 182 umfassten Abschnitte des Randstreifens 106b sind radial nach innen umgebogen, so dass sie unmittelbar an der Unterseite des Kontaktblechteils 112 anliegen. In der Folge ist der Wickel thermisch und elektrisch besser angebunden.

Auf dem Boden 101a des Gehäusebechers 101 sitzt der Elektroden-Separator-Verbund 104 unmittelbar auf. Der freie Randstreifen 109b steht in unmittelbarem Kontakt mit dem Boden und kann mit diesem beispielsweise durch Verschweißung verbunden werden. Die Verschweißung kann durch den Boden 101a hindurch mittels eines Lasers bewirkt werden.

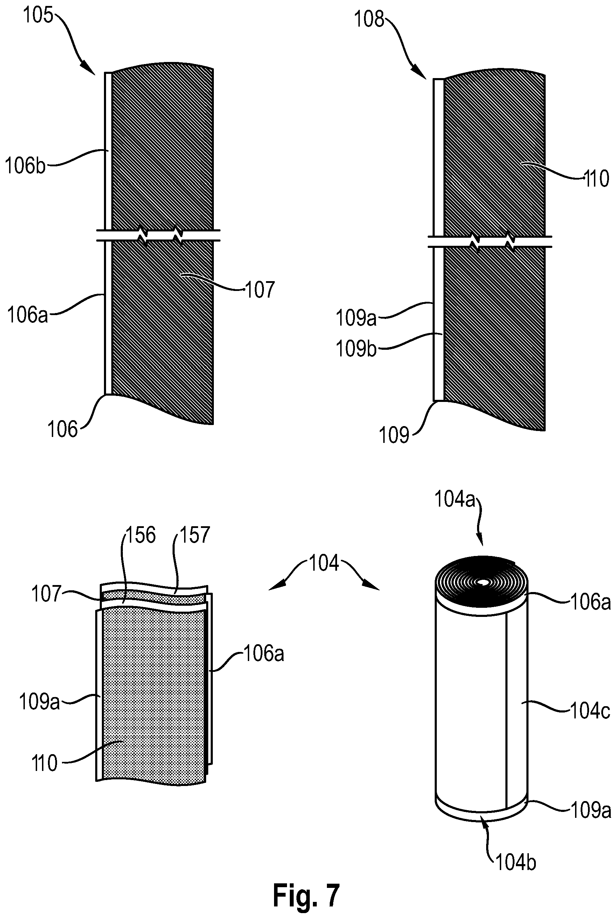

**Fig. 7** veranschaulicht den Aufbau eines Elektroden-Separator-Verbunds 104, der Bestandteil eines erfindungsgemäßen Energiespeicherelements sein kann. Der Verbund 104 umfasst die bandförmige Anode 105 mit dem bandförmigen Anodenstromkollektor 106, der einen ersten Längsrand 106a und einen dazu parallelen zweiten Längsrand aufweist. Bei dem Anodenstromkollektor 106 handelt es sich um eine Folie aus Kupfer oder Nickel. Diese umfasst einen bandförmigen Hauptbereich, der mit einer Schicht aus negativem Elektrodenmaterial 107 beladen ist, sowie einen freien Randstreifen 106b, der sich entlang seines ersten Längsrands 106a erstreckt und der nicht mit dem Elektrodenmaterial 107 beladen ist. Weiterhin umfasst der Verbund 104 die bandförmige Kathode 108 mit dem bandförmigen Kathodenstromkollektor 109, der einen ersten Längsrand 109a und einen dazu parallelen zweiten Längsrand aufweist. Bei dem Kathodenstromkollektor 109 handelt es sich um eine Aluminiumfolie. Er umfasst einen bandförmigen Hauptbereich, der mit einer Schicht aus positivem Elektrodenmaterial 110 beladen ist, sowie einen freien Randstreifen 109b, der sich entlang seines ersten Längsrands 109a erstreckt und der nicht mit dem Elektrodenmaterial 110 beladen ist. Beide Elektroden sind einzeln in ungewickeltem Zustand dargestellt.

Die Anode 105 und die Kathode 108 sind innerhalb des Elektroden-Separator-Verbunds 104 versetzt zueinander angeordnet, so dass der erste Längsrand 106a des Anodenstromkollektors 106 aus der ersten endständigen Stirnseite 104a und der erste Längsrand 109a des Kathodenstromkollektors 109 aus der zweiten endständigen Stirnseite 104b des Elektroden-Separator-Verbunds 104 austritt. Die versetzte Anordnung geht aus der Darstellung links unten hervor. Dort sind auch die zwei bandförmigen Separatoren 156 und 157 dargestellt, die im Wickel die Elektroden 105 und 108 voneinander trennen.

In der Darstellung rechts unten ist der Elektroden-Separator-Verbunds 104 in gewickelter Form dargestellt, wie er in einer Energiespeicherzelle gemäß einer der Figuren 1 bis 4 zum Einsatz kommen kann. Die aus den Stirnseiten 104a und 104b austretenden Elektrodenränder 106a und 109a sind gut zu erkennen. Der Wickelmantel 104c wird durch eine Kunststofffolie gebildet.

## Patentansprüche

1. Energiespeicherelement (100) mit den folgenden Merkmalen:
a. Das Energiespeicherelement umfasst einen Elektroden-Separator-Verbund (104) aus bandförmigen Elektroden und mindestens einem bandförmigen Separator mit der Sequenz Anode (105) / Separator (156) / Kathode (108),
b. der Elektroden-Separator-Verbund (104) liegt in Form eines zylindrischen Wickels mit einer ersten endständigen Stirnseite (104a) und einer zweiten endständigen Stirnseite (104b) und einem dazwischen liegenden Wickelmantel (104c) vor, in dem die Anode (105), der Separator (156) und die Kathode (108) um eine Wickelachse A, die das axiale Zentrum des Wickels definiert, herum aufgewickelt sind,
c. die Anode (105) des Elektroden-Separator-Verbunds (104) umfasst einen Anodenstromkollektor (106), der einen streifenförmigen Hauptbereich (107) aufweist, der mit einer Schicht aus negativem Elektrodenmaterial beladen ist, sowie einen freien Randstreifen (106b), der sich entlang eines Längsrands (106a) des Anodenstromkollektors (106) erstreckt und der nicht mit dem negativen Elektrodenmaterial beladen ist,
d. die Kathode (108) des Elektroden-Separator-Verbunds (104) umfasst einen Kathodenstromkollektor (109), der einen streifenförmigen Hauptbereich (110) aufweist, der mit einer Schicht aus positivem Elektrodenmaterial beladen ist, sowie einen freien Randstreifen (109b), der sich entlang eines Längsrands (109a) des Kathodenstromkollektors (109) erstreckt und der nicht mit dem positiven Elektrodenmaterial (110) beladen ist,
e. die Anode (105) und die Kathode (108) sind innerhalb des Elektroden-Separator-Verbunds (104) derart angeordnet, dass der freie Randstreifen (106b) des Anodenstromkollektors (106) aus der ersten endständigen Stirnseite (104a) austritt und der freie Randstreifen (106b) des Kathodenstromkollektors (109) aus der zweiten endständigen Stirnseite (104b) austritt,
f. das Energiespeicherelement umfasst ein Kontaktblechteil (112), das
- auf dem freien Randstreifen (106b) des Anodenstromkollektors (106) aufsitzt und die erste endständige Stirnseite (104a) abdeckt und mit dem freien Randstreifen (106b) des Anodenstromkollektors (106) stoffschlüssig verbunden ist oder
- auf dem freien Randstreifen (109b) des Kathodenstromkollektors (109) aufsitzt und die zweite endständige Stirnseite (104b) abdeckt und mit dem freien Randstreifen (109b) des Kathodenstromkollektors (109) stoffschlüssig verbunden ist,
wobei
g. der Stromkollektor (106 oder 109), auf dessen Randstreifen (106b oder 109b) das Kontaktblechteil (112) aufsitzt, in dem zylindrischen Wickel in einer spiralförmigen Anordnung vorliegt und eine außenliegende Windung (181) mit einem maximalen Radius R₁ aufweist, und
h. das Kontaktblechteil (112) auf der von ihm abgedeckten Stirnseite (104a oder 104b) ausgehend vom Schnittpunkt des Kontaktblechteils 112 mit der Wickelachse eine maximale radiale Erstreckung Eₘₐₓ aufweist,
**dadurch gekennzeichnet, dass**
i. der von der außenliegenden Windung (181) umfasste Bereich des Randstreifens (106b oder 109b) zumindest abschnittweise radial nach innen umgebogen ist und
j. Eₘₐₓ < R₁ ist.

2. Energiespeicherelement (100) nach Anspruch 1 mit mindestens einem der folgenden zusätzlichen Merkmale:
a. Der Stromkollektor (106 oder 109), auf dessen Randstreifen (106b oder 109b) das Kontaktblechteil (112) aufsitzt, weist unmittelbar anschließend an die außenliegende Windung (181) in Richtung der Wickelachse A n weitere Windungen mit einem maximalen Radius, der < R₁ und > Eₘₐₓ ist, auf, die jeweils einen Bereich des Randstreifens (106b oder 109b) umfassen, der zumindest abschnittweise radial nach innen umgebogen ist.
b. *n* = 2 bis 30.

3. Energiespeicherelement (100) nach Anspruch 1 oder Anspruch 2 mit mindestens einem der folgenden zusätzlichen Merkmale:
a. Der Stromkollektor (106 oder 109), auf dessen Randstreifen (106b oder 109b) das Kontaktblechteil (112) aufsitzt, weist unmittelbar anschließend an die außenliegende Windung (181) in Richtung der Wickelachse A eine weitere Windung (182) mit einem maximalen Radius R₂ auf, wobei R₂ < R₁ ist und Eₘₐₓ < R₂ ist und der von der Windung (182) mit dem Radius R₂ umfasste Bereich des Randstreifens (106b oder 109b) zumindest abschnittweise radial nach innen umgebogen ist.
b. Der Stromkollektor (106 oder 109), auf dessen Randstreifen (106b oder 109b) das Kontaktblechteil (112) aufsitzt, weist unmittelbar anschließend an die Windung (182) mit dem maximalen Radius R₂ in Richtung der Wickelachse A eine weitere Windung (183) mit einem maximalen Radius R₃ auf, wobei R₃ < R₂ ist und Eₘₐₓ < R₃ ist und der von der Windung (183) mit dem Durchmesser R₃ umfasste Bereich des Randstreifens (106b oder 109b) zumindest abschnittweise radial nach innen umgebogen ist.
c. Der Stromkollektor (106 oder 109), auf dessen Randstreifen (106b oder 109b) das Kontaktblechteil (112) aufsitzt, weist unmittelbar anschließend an die Windung (183) mit dem maximalen Radius R₃ in Richtung der Wickelachse A eine weitere Windung (184) mit einem maximalen Radius R₄ auf, wobei R₄ < R₃ ist und Eₘₐₓ < R₄ ist und der von der Windung (184) mit dem Radius R₄ umfasste Bereich des Randstreifens (106b oder 109b) zumindest abschnittweise radial nach innen umgebogen ist.
d. Der Stromkollektor (106 oder 109), auf dessen Randstreifen (106b oder 109b) das Kontaktblechteil (112) aufsitzt, weist unmittelbar anschließend an die Windung (184) mit dem maximalen Radius R₄ in Richtung der Wickelachse A eine weitere Windung (185) mit einem maximalen Radius R₅ auf, wobei R₅ < R₄ ist und Eₘₐₓ < R₅ ist und der von der Windung (185) mit dem Radius R₅ umfasste Bereich des Randstreifens (106b oder 109b) zumindest abschnittweise radial nach innen umgebogen ist.
e. Der Stromkollektor (106 oder 109), auf dessen Randstreifen (106b oder 109b) das Kontaktblechteil (112) aufsitzt, weist unmittelbar anschließend an die Windung (185) mit dem maximalen Radius R₅ in Richtung der Wickelachse A eine weitere Windung (186) mit einem maximalen Durchmesser R₆ auf, wobei R₆ < R₅ ist und Eₘₐₓ < R₆ ist und der von der Windung (186) mit dem Radius R₆ umfasste Bereich des Randstreifens (106b oder 109b) zumindest abschnittweise radial nach innen umgebogen ist.

4. Energiespeicherelement (100) nach einem der vorhergehenden Ansprüche mit mindestens einem der folgenden zusätzlichen Merkmale:
a. Zwischen dem Kontaktblechteil (112) und dem Randstreifen (106b oder 109b), auf dem das Kontaktblechteil (112) aufsitzt, besteht mindestens eine stoffschlüssige Verbindung.
b. Bei der mindestens einen stoffschlüssigen Verbindung zwischen dem Kontaktblechteil (112) und dem Randstreifen (106b oder 109b), auf dem das Kontaktblechteil (112) aufsitzt, handelt es sich um eine Verschweißung oder eine Verlötung oder eine Verklebung.
c. Die mindestens eine stoffschlüssige Verbindung besteht zwischen dem Kontaktblechteil (112) und dem von der außenliegenden Windung (181) umfassten Bereich des Randstreifens (106b oder 109b).

5. Energiespeicherelement (100) nach einem der vorhergehenden Ansprüche mit mindestens einem der folgenden zusätzlichen Merkmale:
a. Das Kontaktblechteil (112) ist als Scheibe mit kreisförmigem Umfang ausgebildet.
b. Das Kontaktblechteil (112) umfasst einen zentralen Bereich (112a), an den sich Fortsätze (112b) anschließen.

6. Energiespeicherelement (100) nach einem der vorhergehenden Ansprüche mit mindestens einem der folgenden zusätzlichen Merkmale:
a. Das Kontaktblechteil weist eine Dicke im Bereich von 50 µm bis 600 µm, bevorzugt im Bereich von 150 µm bis 350 µm, auf.
b. Das Kontaktblechteil weist zwei sich gegenüberliegenden Flachseiten auf und erstreckt sich im Wesentlichen nur in einer Dimension.
c. Das Kontaktblechteil ist derart dimensioniert, dass es mindestens 25 %, bevorzugt mindestens 50 %, besonders bevorzugt mindestens 75 %, der Stirnseite, aus der der mit ihm verbundene freie Randstreifen des jeweiligen Stromkollektors austritt, abdeckt.
d. Das Kontaktblechteil weist mindestens eine Durchbrechung (112d), insbesondere mindestens ein Loch und/oder mindestens einen Schlitz, auf.
e. Das Kontaktblechteil weist mindestens eine Sicke auf, die auf einer Flachseite des Kontaktblechteils als längliche Vertiefung und auf der gegenüberliegenden Flachseite als längliche Erhöhung zu Tage tritt, wobei es bevorzugt ist, dass das Kontaktblechteil mit der Flachseite, welche die längliche Erhöhung trägt, auf dem freien Randstreifen des jeweiligen Stromkollektors aufsitzt.
f. Das Kontaktblechteil ist im Bereich der Sicke mit dem freien Randstreifen des Stromkollektors verschweißt, insbesondere über eine oder mehrere in der Sicke angeordnete Schweißnähte und/oder Schweißpunkte.

7. Energiespeicherelement (100) nach einem der vorhergehenden Ansprüche mit mindestens einem der folgenden zusätzlichen Merkmale:
a. Das Energiespeicherelement umfasst ein luft- und flüssigkeitsdicht verschlossenes Gehäuse, das einen metallischen Gehäusebecher (101) mit einer endständigen kreisförmigen Öffnung sowie einem kreisförmigen Boden (101a) und einen Deckel (102) mit einem kreisförmigen Rand (102a), welcher die kreisförmige Öffnung verschließt, umfasst, und das einen Innenraum umschließt, in dem der Elektroden-Separator-Verbund (104) angeordnet ist.
b. Der Deckel (102) ist als Deckelbaugruppe ausgebildet, die eine Metallscheibe (113) und eine Polkappe (117), die in elektrischem sowie in unmittelbarem mechanischem Kontakt miteinander stehen.
c. Die Deckelbaugruppe umfasst eine Dichtung (103), die auf ihren Rand aufgezogen ist.

8. Energiespeicherelement (100) nach Anspruch 7 mit mindestens einem der folgenden zusätzlichen Merkmale:
a. Der Gehäusebecher (101) umfasst in axialer Abfolge den Boden (101a), einen Zentralabschnitt (101b) und einen Verschlussabschnitt (101c), wobei
- der Zentralabschnitt (101b) zylindrisch ausgebildet ist und in dem Zentralabschnitt (101b) der Wickelmantel (104c) des als Wickel ausgebildeten Elektroden-Separator-Verbunds (104) mit der Innenseite des Gehäusebechers (101) in Kontakt steht, und
- in dem Verschlussabschnitt (101c) die ringförmige Dichtung (103) in einem Presskontakt mit dem Rand des Deckels (102) und der Innenseite des Gehäusebechers (101) steht, und
b. der Gehäusebecher (101) weist in dem Verschlussabschnitt (101c) einen die kreisförmige Öffnung definierenden Öffnungsrand (101d) auf, der radial nach innen über den von der Dichtung (103) umschlossenen Rand des Deckels (102) umgebogen ist und der den Deckel (102) einschließlich der Dichtung (103) in der kreisförmigen Öffnung des Gehäusebechers (101) formschlüssig fixiert.
